# EUROPEAN PATENT SPECIFICATION

(11) **EP 2 679 373 B1**
(45) Date of publication and mention of the grant of the patent: **22.04.2015**
(21) Application number: 12183966.6
(22) Date of filing: 12.09.2012
(51) Int. Cl.: B29C 44/56, C08K 3/08

(54) **Method for manufacturing of foamed polystyrene boards**
Verfahren zur Herstellung von Polystyrolschaumplatten
Procédé de fabrication de panneaux de polystyrène expansé

(30) Priority: 29.06.2012 PL 39973012
(43) Date of publication of application: 01.01.2014
(73) Proprietor: NANOTECHNOLOGIES SPOLKA Z OGRANICZONA ODPOWIEDZIALNOSCIA, 90-752 Lodz (PL)
(72) Inventor: Moscicki, Andrzej, 91-503 Lodz (PL); Chmielecki, Tomasz, 93-313 Lodz (PL)
(74) Representative: Pawlowski, Adam

(56) References cited:
- WO-A1-2011/065861
- US-A1- 2005 008 861
- DATABASE WPI Week 201266 Thomson Scientific, London, GB; AN 2012-K19087 XP002713223, -& PL 390 407 A1 (SCHAUMAPLAST ORGANIKA SPOLKA ZOO) 16 August 2011 (2011-08-16)

## Description

The present invention relates to a foamed polystyrene board and a method for manufacturing of foamed polystyrene boards, commonly called styrofoam.

Standard systems of manufacturing elements from foamed polystyrene, for example a system described in American patent no. US4721588, comprise an expander for the preliminary expansion of raw material that is expandable polystyrene grains, a silo for seasoning the preliminarily expanded raw material and a line supplying the raw material from the silo to moulding stations, where the it is further expanded assuming the shape determined by a mould at a given station.

A Polish patent application no. P.390407 features a method for manufacturing of elements of foamed polystyrene, whereby the raw material, in form of expandable polystyrene grains, is submitted to preliminary expansion, and then the preliminarily expanded raw material is seasoned in a silo, after which it is supplied from the silo, using branches of raw material supply line to moulding stations, where secondary expansion is performed until the material assumes the shape determined by the mould of a given moulding station. After the moulding, properly formed elements are separated from production waste, and the production waste is taken to a mill, where it is ground to obtain secondary material, which is then transported form the mill, through the branches of transport line to feeders installed in the branches of the raw material supply line, where the content of secondary material in the raw material (supplied to the moulding station for elements attached to a given branching of the raw material supply line) is adjusted.

One of popular elements produced from foamed polystyrene is a flat board, used for example as insulation construction material for thermal insulation of external walls of the buildings. They are usually produced by inputting preliminarily extended polystyrene grains into a mould which is repeatedly larger than the planned boards, in which the polystyrene grains are expanded, forming a styrofoam block. The block is cut into boards of a desired size.

Boards for thermal insulation of buildings are exposed to negative atmospheric conditions during utilisation. Particularly negative conditions are present in the area between the board and a wall, which provides conditions for fungi and bacteria development. It would be preferable to develop a board, with which the level of fungi and bacteria development between the board and a wall would be reduced.

There are known coating agents based on the nanoparticles of metals, usually silver, which are used to inhibit the development of fungi and bacteria. However, these agents are usually used to be absorbed by fabrics or mixed with moulded products in a moulding batch. Popular agents cannot be used for coating styrofoam boards due to their low absorbability, which results in low adhesiveness of these agents to walls or even falling off.

A US patent application US2005008861A1 discloses nanoparticles comprising silver and their nanotechnology-enabled applications, including anti-microbial formulations.

The aim of the invention is to develop a method for manufacturing of foamed polystyrene boards coated with an agent inhibiting the growth of fungi which guarantees better adhesiveness of the agent to the board surface.

The object of the invention is a method for manufacturing of foamed polystyrene boards, whereby raw polystyrene grains are preliminarily expanded in an expander, and then seasoned, after which the seasoned grains are input to a mould, where under raised temperature and pressure, a block is formed. The block is cut into boards of a desired shape and size, and the cut boards are sprayed with a bactericidal colloid consisting of 1% by weight of silver nanoparticles having a diameter of 50 nm in polymer shell, 93% to 97% of alcohol with average boiling point 65°C to 90°C, 0.1% to 1% of surfacants, 0.2% to 2% of wetting agents, 0.5% to 1,5% of silanes, 0.2% to 1.5% of quelanting agents, 0.5% to 1.5% of substances with boiling point below 40°C and 0.1% to 0.5% of substances reducing viscosity of the whole colloid to a value below 1,0 cP. The colloid is sprayed in the amount of 15 to 35 ml/m², after which the board is dried until evaporation of colloid's solvent.

This invention allows to obtain foamed polystyrene boards, coated with an agent inhibiting the development of fungi and bacteria on the board characterised by its high adhesiveness to the board surface.

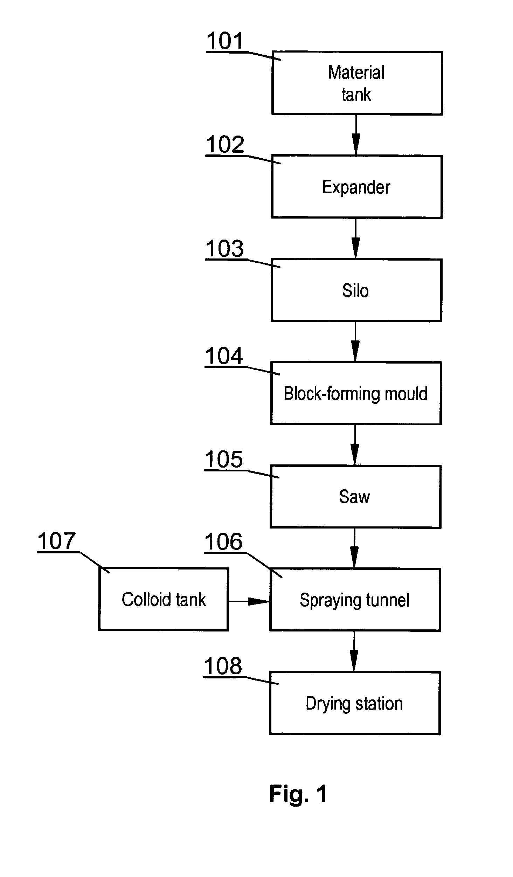

The invention is presented by means of an exemplary embodiment on a drawing, in which Fig. 1 presents a diagram of a technological line for carrying out the method according to the invention.

Raw material in form of expandable polystyrene grains is supplied from a tank 101 to an expander 102, where the grains are expanded under raised temperature and pressure, according to technical specification for a given type of grains. Afterwards, the expanded grains are seasoned in a silo 103 to obtain parameters necessary for appropriate moulding of the elements. After seasoning, grains are transported from the silo 103 to a block forming mould 104, where, under appropriate temperature and pressure, the final expansion of the grains is performed; the grains are integrated and take the shape of a block, limited by the walls of the mould 104. Thus moulded blocks are then supplied to a saw-cutting station 105, where they are cut into boards of desired shape and size. Next, the boards are transported to a spraying tunnel 106, where the are sprayed with bactericidal colloid from a tank 107.

The bactericidal colloid in the tank 107 consists of 1% by weight of silver nanoparticles having a diameter of 50 nm in a polymer shell, 93% to 97% of alcohol with average boiling point 65°C to 90°C, 0.1% to 1% of surfacants, 0.2% to 2% of wetting agents, 0.5% to 1,5% of silanes, 0.2% to 1.5% of quelanting agents, 0.5% to 1.5% of high volatility substances with boiling point below 40°C and 0.1% to 0.5% of substances reducing viscosity of the whole colloid below 1,0 cP.

The applied alcohol can be for example ethanol or propanol. Low boiling point (below 80° C) quick and total evaporation of a medium, in which nAg is dispersed.

One of the surfactant which can be applied is for example 15-S-5 by Dow Chemical Company. As the wetting agent there can be used for example secondary alcohol ethoxylate. Application of surfactants and wetting agents facilitates the reduction of colloid surface tension and its uniform application on the board surface.

Silanes increase the adhesiveness of the nanosilver to the base.

Quelanting agents, electrostatic (i.e. ion, for example carboxylic, amine or sulfone) shells facilitate dispersion of nanosilver in the colloid.

As a high volatility substance there can be used for example acetone. It helps generating evaporation centres and increases evaporation of alcohol, which is the main solvent of the solution.

As the substances reducing viscosity there can be used for example BYK W966 by BYK-Chemie GmbH (Wesel, Germany), which results in a more effective application of the colloid on the surface.

Bactericidal colloid from the tank 107 is sprayed equally on the whole surface of the boards (15 to 35 ml/m² depending on the material and desired final concentration of nAg) in the spraying tunnel using spray nozzles. Afterwards, the boards are dried in a drying station 108, where they are left until the colloid's solvents evaporate.

The applied bactericidal colloid is characterised by a very good adhesion to the board surface.

### Example 1

Chemical composition of the applied colloid used:
1% of silver nanoparticles having a diameter of 50 nm in polymer shell
93% of ethanol
1% of Tergitol 15-S-5.
1 % of secondary alcohol ethoxylate in the form of Rokanol K3 agent by PCC Exol (Brzeg Dolny, Poland)
1% of silanes in the form of: alkyl-functional silanes: n-octadecyltrichlorosilane
1% of quelanting agents in the form of ethylenediaminetetraacetic acid (EDTA)
1.5% of high volatility substances in the form of acetone
0.5% of substances reducing viscosity in the form of Byk W966 agent

The colloid is applied on the board in the amount of 15 ml/m².

### Example 2

Chemical composition of the applied colloid used:
1% of silver nanoparticles having a diameter of 50 nm in polymer shell
97% of ethanol
0.1% of Tergitol 15-S-5.
0.2% of secondary alcohol ethoxylate in the form of Rokanol K7 agent by PCC
Exol (Brzeg Dolny, Poland)
0.5% of silanes in the form of: alkyl-functional silanes: n-octadecyltrichlorosilane
0.2% of quelanting agents in the form of ethylenediaminetetraacetic acid (EDTA)
0.9% of acetone
0.1% of substances reducing viscosity in the form of Byk W966 agent

The colloid is applied on the board in the amount of 35 ml/m².

## Claims

1. A method for manufacturing of foamed polystyrene boards, whereby raw polystyrene grains are preliminarily expanded in an expander, and then seasoned, after which the seasoned grains are input to a mould, where under increased temperature and pressure, a block is formed, wherein the block is cut into boards of a desired shape and size, **characterized in that** the cut boards are sprayed with a bactericidal colloid consisting of 1% by weight of silver nanoparticles having a diameter of 50 nm in polymer shell, 93% to 97% of alcohol with average boiling point 65°C to 90°C, 0.1% to 1% of surfacants, 0.2% to 2% of wetting agents, 0.5% to 1,5% of silanes, 0.2% to 1.5% of quelanting agents, 0.5% to 1.5% of substances with boiling point below 40°C and 0.1% to 0.5% of substances reducing viscosity of the whole colloid to a value below 1,0 cP, wherein the colloid is sprayed in the amount of 15 to 35 ml/m², after which the board is dried until evaporation of the colloid solvent.

## Patentansprüche

1. Verfahren für die Herstellung von geschäumten Polystyrolplatten, wobei rohe Polystyrolkörner vorher in einem Expander expandiert, dann gereift und anschließend in eine Form gegeben werden, wo unter erhöhtem Druck und erhöhter Temperatur ein Block geformt wird, wobei der Block dann in Platten von gewünschter Größe und Form geschnitten wird, **dadurch gekennzeichnet, dass** die geschnittenen Platten mit einem bakteriziden Kolloid besprüht werden, bestehend aus 1 Gewichtsprozent Silber-Nanopartikel mit einem Durchmesser von 50 nm in einer Hülle aus Polymer, 93 % bis 97 % Alkohol mit einem durchschnittlichen Siedepunkt zwischen 65 °C und 90 °C, 0,1 % bis 1 % Tenside, 0,2 % bis 2 % Benetzungsmittel, 0,5 % bis 1,5 % Silan, 0,2 % bis 1,5 % Chelatbildner, 0,5 % bis 1,5 % Substanzen mit einem Siedepunkt unter 40 °C und 0,1 % bis 0,5 % Substanzen zur Viskositätsreduzierung der Kolloide auf einen Wert unter 1,0 cP, wobei die Menge der gesprühten Kolloide 15 bis 35 ml/m² beträgt und die Platten dann bis zur Verdampfung der Kolloidlösung getrocknet werden.

## Revendications

1. Une méthode de fabrication de panneaux de mousse de polystyrène, dans laquelle des grains de polystyrène bruts sont tout d'abord expansés dans un expanseur, puis, soumis à maturation, les grains ainsi maturés étant ensuite introduits dans un moule, où, sous une température et une pression accrues, un bloc se forme, le bloc étant coupé en panneaux de forme et taille désirées, **caractérisés par le fait que** les panneaux coupés sont pulvérisés avec un colloïde bactéricide composé de 1% en poids de nanoparticules d'argent, de 50 nm de diamètre dans une enveloppe de polymère, de 93% à 97% d'alcool avec un point d'ébullition moyen compris entre 65°C à 90°C, de 0,1 % à 1 % d'agents tensioactifs, de 0,2% à 2% d'agents mouillants, de 0,5% à 1,5% de silanes, de 0,2% à 1,5% d'agents chélateurs, de 0,5% à 1,5% de substances au point d'ébullition inférieur à 40°C, et de 0,1% à 0,5% de substances réduisant la viscosité du colloïde entier à une valeur inférieure à 1,0 cP, dans laquelle de 15 à 35 ml/m² de colloïde est pulvérisé, le panneau étant ensuite séché jusqu'à l'évaporation du solvant colloïde.
